# EUROPÄISCHE PATENTSCHRIFT

(11) **EP 0 711 411 B1**
(45) Veröffentlichungstag und Bekanntmachung des Hinweises auf die Patenterteilung: **05.11.1997**
(21) Anmeldenummer: 94924229.1
(22) Anmeldetag: 04.07.1994
(51) Int. Cl.: G01N 27/12

(54) **SAUERSTOFFSENSOR AUF DER BASIS UNDOTIERTER CUPRATE**
OXYGEN SENSOR BASED ON NON-DOPED CUPRATE
DETECTEUR D'OXYGENE A BASE DE CUPRATE NON DOPE

(30) Priorität: 27.07.1993 DE 4325183
(43) Veröffentlichungstag der Anmeldung: 15.05.1996
(73) Patentinhaber: Heraeus Electro-Nite International N.V., 3530 Houthalen (BE)
(72) Erfinder: HÄRDTL, Karl-Heinz, D-76767 Hagenbach (DE); BLASE, Reiner, D-76185 Karlsruhe (DE); SCHÖNAUER, Ulrich, D-76131 Karlsruhe (DE)
(74) Vertreter: Kühn, Hans-Christian
(86) Internationale Anmeldenummer: EP9402185
(87) Internationale Veröffentlichungsnummer: WO9504270

(56) Entgegenhaltungen:
- EP-A- 0 553 452
- DE-A- 2 334 044
- DE-A- 2 533 442
- DE-A- 2 535 500
- US-A- 5 071 626
- JAPANESE JOURNAL OF APPLIED PHYSICS., Bd.26, Nr.11, November 1987, TOKYO JP Seiten L1881 - L1883 H.NOZAKI ET AL 'Oxygen-sensitive resistivity of La2CuO4 at high temperatures'
- EXTENDED ABSTRACTS, 16. Mai 1993, PRINCETON, NEW JERSEY US Seite 2742 T.MORITA ET AL 'NOx gas sensing properties of La2CuO4 ceramics'

## Beschreibung

Die vorliegende Erfindung betrifft einen Sauerstoffsensor auf der Basis komplexer Metalloxide der allgemeinen Formel

Ln₂CuO_{4+y}

worin
- Ln: Lanthan oder ein Lanthanid mit der Ordnungszahl 58 bis 71,
- y: einen Wert von 0,001 bis 0,1,
bedeuten, insbesondere einen Sauerstoffsensor, der n- und/oder p-halbleitende Sensormaterialien enthält, Verfahren zur Herstellung des Sensors sowie dessen Verwendung.

Gasdetektoren, die Sensormaterialien der allgemeinen Formel

A₂₋ₓA'ₓBO_{4-δ}

enthalten, sind bekannt (DE-23 34 044 C3). Sie werden, beispielsweise in Form des komplexen Oxids La_{1,4}Sr_{0,6}NiO₄ nicht zum Nachweis von Sauerstoff, sondern zum Nachweis von oxidierbaren Gasen verwendet.

Die unter die obige Formel fallenden Cuprate werden aber in der genannten Druckschrift nur am Rande in undotierter Form verwendet, ihre Fähigkeit zum Nachweis oxidierbarer Gase ist nicht besonders ausgeprägt.

Es wurde gefunden, daß Cuprate von seltenen Erden überraschenderweise auch in undotierter Form ein ausgezeichnetes Nachweisverhalten für Sauerstoff aufweisen, wenn im Material eine Sauerstoffstöchiometrieabweichung auf einen Wert von 4 + y eingestellt wird. Demzufolge liegt der vorliegenden Erfindung die Aufgabe zugrunde, neue Sauerstoffsensoren auf der Basis komplexer Metalloxide der allgemeinen Formel

Ln₂CuO_{4+y}

zu schaffen, die insbesondere für den Einsatz in Abgasanlagen, beispielsweise von Kraftfahrzeugen, geeignet sind.

Gelöst wird diese Aufgabe durch das Sensormaterial gemäß dem Kennzeichen des Patentanspruchs 1. Die Unteransprüche geben bevorzugte Ausgestaltungen der Erfindung wieder.

Die Sauerstoffstöchiometrieabweichung y liegt im Bereich von 0,001 bis 0,1, bevorzugt im Bereich von 0,01 bis 0,02.

Die erfindungsgemäßen Sauerstoffsensoren lassen sich folgendermaßen herstellen:

Die entsprechenden Metalloxide, Carbonate und/oder Oxycarbonate aus der Gruppe der seltenen Erden und des Kupfers werden in stöchiometrischem Verhältnis fein vermischt, beispielsweise durch Vermahlen in einer geeigneten Mühle, beispielsweise unter Zugabe eines organischen Lösungsmittels, wie Cyclohexan. Das Mahlgut wird dann sedimentieren gelassen, das Lösungsmittel abdekantiert und das Mahlgut getrocknet. Das Pulver wird anschließend kalziniert, wobei der Kalzinierungsvorgang zur besseren Durchmischung durch eine weitere Vermahlung unterbrochen werden kann. Nach der Kalzinierung wird dann erneut vermahlen, wodurch ein feines Cupratpulver erhalten wird.

Zur Einstellung der Sauerstoffstöchiometrieabweichung der so erhaltenen Cupratpulver werden diese bei hohen Temperaturen von bevorzugt 850° bis 1100°C in einer Sauerstoff-haltigen Atmosphäre, bevorzugt reinem Sauerstoff geglüht.

Das so erhaltene Pulver wird unter Zusatz von Pastengrundstoff und/oder Lösungsmitteln zu einer Paste verarbeitet, und die Paste mit einer Dickschichttechnik, beispielsweise durch Siebdruck, auf ein vorzugsweise nicht-leitendes Metalloxidsubstrat, beispielsweise Al₂O₃, aufgebracht. Die so hergestellte Schicht wird getrocknet und gebrannt, beispielsweise durch Trocknen bei Temperaturen oberhalb von 100°C und anschließend bei steigenden Temperaturen, gegebenenfalls auch mit einem Temperaturprofil, bei dem sich steigende Temperaturen und gleichbleibende Temperaturen abwechseln, eingebrannt. Zum Erhalt der Sauerstoffstöchiometrieabweichung wird der Einbrand in einer sauerstoff-haltigen Atmosphäre, bevorzugt reinem Sauerstoff durchgeführt. Die Einbrenntemperaturen können dabei bis auf etwa 1200°C steigen.

Auf diese Weise erhält man ein mit den Sensormaterialien beschichtetes Metalloxidsubstrat, das nach Anbringen der üblichen Zu- und Ableitungen direkt als Sensor verwendet werden kann.

Die unter Verwendung der erfindungsgemäßen Sensor materialen hergestellten Sauerstoffsensoren zeichnen sich durch geringe Temperaturabhängigkeit und eine hohe Sauerstoff-Empfindlichkeit bei Temperaturen vorzugsweise oberhalb von 500°C aus. Sie haben eine schnelle Einstellkinetik. Der Meßeffekt beruht nicht auf der Änderung eines Grenz- oder Oberflächenwiderstandes, sondern auf der Änderung des Volumenwiderstandes.

Gegenüber den dotierten Sauerstoffsensoren der DE-A 42 02 146.4 haben die erfindungsgemäßen undotierten Cupratmaterialien die folgenden Vorteile:

Das Sauerstoffsensormaterial kann auch ohne gezieltes Einmengen von Dotierungsmetallen erhalten werden.

Die Temperaturabhängigkeit ist noch geringer als bei dotierten Cupraten. Es ergibt sich eine lineare Abhängigkeit des Logarithmus des Widerstandes vom Logarithmus des Sauerstoffpartialdruckes.

Ferner ist es von Vorteil, wenn eine Anordnung in Brückenschaltung mit je einem Sauerstoffsensor mit p- und n-leitenden Sensormaterialien vorgesehen wird, wobei diese an demselben Eingang für die Eingangsspannung in verschiedenen Brückenzweigen der Brückenschaltung liegen und die Meßspannung in der Brückendiagonale abgenommen wird. Die restlichen Schaltelemente der Brücke sind Ohm'sche Widerstände. Diese Anordnung ist insbesondere für die Verschaltung von solchen Sauerstoffsensoren geeignet, die unterschiedliche Temperaturempfindlichkeit des p- und des n-halbleitenden Sensormaterials aufweisen.

Eine weitere Möglichkeit besteht darin, in jedem Brückenzweig zwei Sauerstoffsensoren mit n- und p-halbleitenden Sensormaterial dergestalt einzusetzen, daß sich in einem Brückenzweig der Sauerstoffsensor aus n-leitenden Sensormaterial im anderen Brückenzweig der Sauerstoffsensor aus p-leitendem Sensormaterial, und umgekehrt, gegenüberliegen.

Zweckmäßige Ausgestaltungen und Weiterbildungen der Erfindung sind in den restlichen Unteransprüchen gekennzeichnet.

Ein Ausführungsbeispiel der Erfindung wird nachfolgend unter Bezugnahme auf die Zeichnung näher erläutert. In dieser zeigt:
- Figur 1: den Widerstand eines Lanthancupratsensors über dem Sauerstoffpartialdruck aufgetragen;
- Figur 2: eine erste elektrische Anordnung der Sauerstoffsensoren; und
- Figur 3: eine zweite mögliche Anordnung der Sauerstoffsensoren, jeweils in Brückenschaltung.

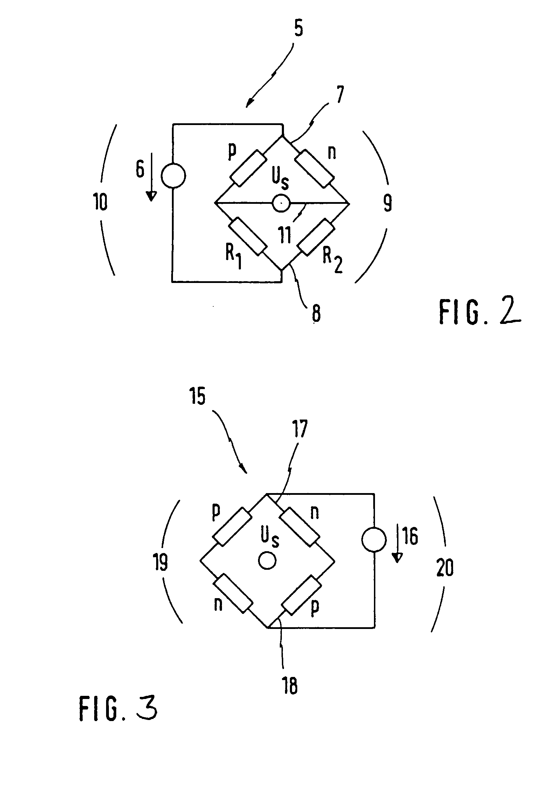

In Fig. 2 ist eine insgesamt mit 5 bezeichnete Brückenschaltung mit einer Eingangsstromquelle 6 vorgesehen, die an die beiden Eingänge 7, 8 der Brücke gelegt sind. In dem einen Brückenzweig 9, der zwischen den Eingängen 7, 8 der Brückenschaltung 5 verläuft, ist die Serienschaltung eines Sauerstoffsensors aus n-leitendem Sensormaterial mit einem Ohm'schen Widerstand vorgegebenen Wertes R₂ und in dem anderen Brückenzweig die Serienschaltung eines Ohm'schen Widerstandes R₁ mit einem Sauerstoffsensor aus p-leitendem Sensormaterial vorgesehen, und zwar dergestalt, daß sich einerseits die Widerstände R₁ und R₂ in den beiden verschiedenen Zweigen gegenüberliegen, ebenso wie die Sauerstoffsensoren mit p- und n-halbleitendem Sensormaterial. In der Brückendiagonale 11 kann die Meßspannung U_{S} abgenommen werden.

In der alternativen Ausführungsform gemäß Fig. 3 werden in der Brückenschaltung 15 die Eingangsspannung 16 zwischen den Eingängen 17 und 18 der Brückenschaltung 15 angelegt. In jedem der beiden Zweige 19, 20 ist die Serienschaltung zweier Sauerstoffsensoren mit einmal einem n-halbleitenden und einmal mit einem p-halbleitendem Sensormaterial angeordnet, und zwar dergestalt, daß jedem Sauerstoffsensor aus n-leitendem Sensormaterial in dem einen Brückenzweig ein solcher mit p-leitendem Sensormaterial im anderen Zweig, und umgekehrt, gegenüberliegt. Diese Ausgestaltung hat bei gleicher Temperaturempfindlichkeit des p- und n-leitenden Sensormaterials den Vorteil, daß sich die höchste Sauerstoffempfindlichkeit bei praktisch nicht vorhandener Temperaturabhängigkeit ergibt.

Weitere Beispiele werden nachfolgend beschrieben.

### BEISPIEL 1

### Herstellung eines Cupratpulvers der Formel La₂CuO_{4+y}

Pulverförmiges La₂O₃ wird in einem Al₂O₃-Tiegel bei 830°C 4 h lang ausgeglüht. Danach wird die Ofentemperatur stufenlos auf ca. 200°C abgekühlt. Das noch heiße La₂O₃ wird dem Ofen entnommen und im stöchiometrischen Verhältnis 1:0,24415 mit CuO unter Zugabe von Cyclohexan in einem Mahlbecher 1 h lang vermischt. Nach einer Sedimentationszeit von 30 min wird das Lösemittel abgeschüttet. In einem Trockenofen wird das Mahlgut bei 60°C getrocknet.

Im folgenden Schritt wird die Pulvermischung 16 h lang bei 850°C in Luft kalziniert. Das kalzinierte Pulver wird durch Mahlen auf eine mittlere Korngröße von 5 µm gebracht. Röntgendiffraktometrische und Pulver-Partikelgrößen-Messungen werden zur Bestätigung der einphasigen Bildung von La₂CuO_{4+y} und der Pulverkorngröße herangezogen.

### BEISPIEL 2

### Herstellung eines Cupratpulvers der Formel La₂CuO_{4+y}

Pulverförmiges, feingemahlenes La₂O₂CO₃ (mittlere Korngröße 1 µm) wird im stöchiometrischen Verhältnis 1:0,2151 mit feingemahlenem CuO (mittlere Korngröße 0,8 µm) unter Zugabe von Cyclohexan in einem Mahl becher 1 h lang vermischt. Nach einer Sedimentationszeit von 30 min wird das Lösemittel abgeschüttet. In einem Trockenofen wird das Mahlgut bei 60°C getrocknet.

Im folgenden Schritt wird die Pulvermischung 16 h lang bei 850°C in Luft kalziniert. Nach 1-stündigem Zwischenmahlen wird das Pulver ein zweites Mal 16 h lang bei 850°C kalziniert. Das zweimal kalzinierte Pulver wird durch Mahlen auf eine mittlere Korngröße von 1,5 µm gebracht. Röntgendiffraktometrische und Pulver-Partikelgrößen-Messungen werden zur Bestätigung der einphasigen Bildung von La₂CuO_{4+y} und der Pulverkorngröße herangezogen.

### BEISPIEL 3

### Einstellen der Sauerstoffstöchiometrieabweichung

Die nach den Präparationsvorschriften 1.) und 2.) hergestellten Lanthancupratpulver werden bei 850 bis 1100°C in reinem Sauerstoff geglüht. Eine Analyse des Sauerstoffgehalts in der nach diesen Präparationsvorschriften hergestellten Keramik ergibt eine Sauerstoffüberstöchiometrie von 0,5 %, d.h. es liegt die Verbindung La₂CuO_{4,02} vor. Der überschüssige Sauerstoff befindet sich dabei vorzugsweise auf Zwischengitterplätzen.

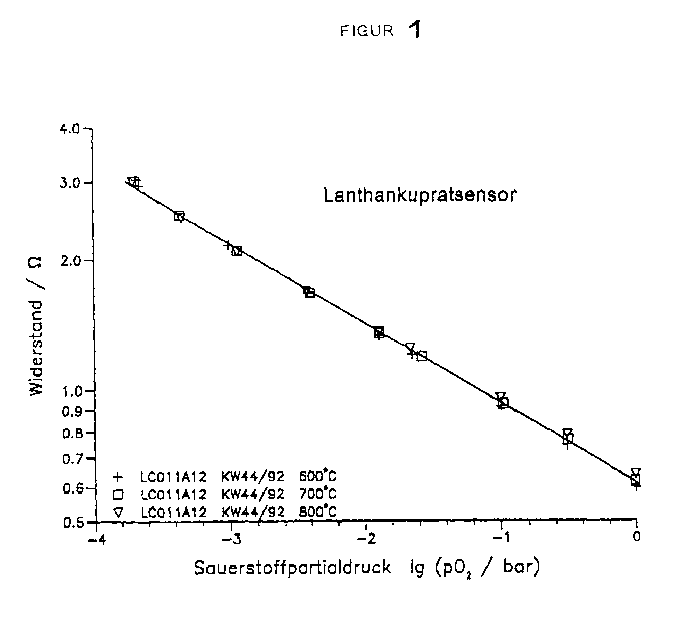

Die Messung des elektrischen Widerstands eines nach den Beispielen 1 bis 3 hergestellten Lanthancupratsensors ergibt eine Abhängigkeit vom Sauerstoffpartialdruck der Gasatmosphäre, wie sie in Fig. 1 dargestellt ist.

## Patentansprüche

1. Sensormaterial für einen Sauerstoffsensor auf der Basis komplexer Metalloxide der allgemeinen Formel
Ln₂CuO_{4+y}
wobei
Ln Lanthan oder ein Lanthanid mit einer Ordnungszahl von 58 bis 71 ist, und
y die Sauerstoffstöchiometrieabweichung im Bereich von 0,001 bis 0,1
darstellt.

2. Sensormaterial nach Anspruch 1, dadurch gekennzeichnet, daß y im Bereich von 0,01 bis 0,02 liegt.

3. Verwendung des Sensormaterials nach einem oder mehreren der Ansprüche 1 und 2 für die Herstellung von Sauerstoffsensoren, wobei das Sensormaterial auf ein nicht-leitendes Metalloxidsubstrat aufgetragen wird.

4. Verwendung nach Anspruch 3, dadurch gekennzeichnet, daß das Auftragen durch Siebdruck auf das Metalloxidsubstrat erfolgt ist.

5. Verwendung nach Anspruch 3, gekennzeichnet durch eine Anordnung je eines Sauerstoffsensors mit p- und eines mit n-leitenden Sensormaterialien in Brückenschaltung, wobei diese Sensoren an demselben Eingang für die Eingangsspannung in verschiedenen Brückenzweigen der Brückenschaltung liegen.

6. Verwendung nach Anspruch 5, gekennzeichnet durch eine Anordnung in Brückenschaltung je eines Sauerstoffsensors mit p- und n-leitenden Sensormaterialien, wobei in dem einen Brückenzweig die Serienschaltung zweier Sauerstoffsensoren aus einem p- und einem n-leitenden Sensormaterial und in dem anderen Brückenzweig die Serienschaltung zweier Sauerstoffsensoren aus einem n- und p-leitenden Sensormaterial so vorgesehen ist, daß dem Sauerstoffsensor mit n-leitendem Sensormaterial in dem einen Brückenzweig ein Sauerstoffsensor mit p-leitendem Sensormaterial in dem anderen Brückenzweig gegenüberliegt.

7. Verwendung nach Anspruch 4, dadurch gekennzeichnet, daß das Auftragen auf das Metalloxidsubstrat Al₂O₃ erfolgt ist.

8. Verwendung der Sensormaterialien nach den Ansprüchen 1 bis 7 in Abgasanlagen, insbesondere von Kraftfahrzeugen.

9. Verfahren zur Herstellung eines Sauerstoffsensors unter Verwendung der Sensormaterialien nach einem der Ansprüche 1 bis 7, dadurch gekennzeichnet, daß die Oxide, Carbonate und/oder Oxycarbonate der Metalle in stöchiometrischem Verhältnis fein vermischt, in einem organischen Lösungsmittel sedimentiert, getrocknet und kalziniert werden und das so erhaltene Cupratpulver in Form einer Paste vermittels einer Dickschichttechnik auf ein vorzugsweise nicht-leitendes Metalloxidsubstrat aufgebracht und eingebrannt werden und die Sauerstoffstöchiometrieabweichung durch Sintern in einer O₂-haltigen Atmosphäre, vorzugsweise reinem Sauerstoff eingestellt wird.

10. Verfahren nach Anspruch 9, dadurch gekennzeichnet, daß die Kalzinierung in zwei Kalziniervorgängen bei Temperaturen von 800 bis 1000° mit zwischengeschalteter Vermahlungsstufe durchgeführt wird.

11. Verfahren nach Anspruch 9, dadurch gekennzeichnet, daß das Einbrennen bei steigenden Temperaturen bis ca. 1.200°C durchgeführt wird.

## Claims

1. A sensor material for an oxygen sensor on the basis of complex metal oxides of the general formula:
Ln₂CuO_{4+y}
wherein
Ln is lanthanum or a lanthanide with an atomic number of 58 to 71, and
y represents the oxygen stoichiometry variation in the range of 0.001 to 0.1.

2. A sensor material according to claim 1 characterised in that y is in the range of 0.01 to 0.02.

3. Use of the sensor material according to one or more of claims 1 and 2 for the production of oxygen sensors, wherein the sensor material is applied to a non-conducting metal oxide substrate.

4. Use according to claim 3 characterised in that application to the metal oxide substrate is effected by screen printing.

5. Use according to claim 3 characterised by an arrangement of a respective oxygen sensor with p-conducting sensor material and one with n-conducting sensor material in a bridge circuit, wherein said sensors are disposed at the same input for the input voltage in different arms of the bridge circuit.

6. Use according to claim 5 characterised by an arrangement in a bridge circuit of a respective oxygen sensor with p-conducting and n-conducting sensor materials, wherein the series circuit of two oxygen sensors comprising a p- and an n-conducting sensor material is provided in the one bridge arm and the series circuit of two oxygen sensors comprising an n- and p-conducting sensor material is provided in the other bridge arm, such that disposed opposite the oxygen sensor with n-conducting sensor material in the one bridge arm is an oxygen sensor with p-conducting sensor material in the other bridge arm.

7. Use according to claim 4 characterised in that application is effected on to the metal oxide substrate Al₂O₃.

8. Use of the sensor materials according to claims 1 to 7 in exhaust gas systems, in particular of motor vehicles.

9. A process for the production of an oxygen sensor using the sensor materials according to one of claims 1 to 7 characterised in that the oxides, carbonates, and/or oxycarbonates of the metals are finely mixed in stoichiometric ratio, sedimented in an organic solvent, dried and calcined and the cuprate powder obtained in that way is applied in the form of a paste by means of a thick-film procedure to a preferably non-conducting metal oxide substrate and baked thereon and the oxygen stoichiometry variation is adjusted by sintering in an O₂-bearing atmosphere, preferably pure oxygen.

10. A process according to claim 9 characterised in that the calcining procedure is effected in two calcining operations at temperatures of 800 to 1000° with an interposed grinding step.

11. A process according to claim 9 characterised in that the baking operation is effected at rising temperatures of up to about 1200°C.

## Revendications

1. Matériau capteur, pour un capteur d'oxygène, à base d'oxydes métalliques complexes de formule générale :
Ln₂CuO_{4+y}
où
Ln est le lanthane ou un lanthanide ayant un numéro atomique de 58 à 71, et
y est l'écart stoechiométrique de l'oxygène, compris entre 0,001 et 0,1.

2. Matériau capteur selon la revendication 1, caractérisé en ce que y est compris dans l'intervalle de 0,01 à 0,02.

3. Utilisation du matériau capteur selon au moins l'une des revendications 1 ou 2, pour fabriquer des capteurs d'oxygène, où le matériau capteur est appliqué sur un substrat d'un oxyde métallique non conducteur.

4. Utilisation selon la revendication 3, caractérisée en ce que l'application sur le substrat d'oxyde métallique s'effectue par sérigraphie.

5. Utilisation selon la revendication 3, caractérisée par un capteur d'oxygène comportant des matériaux capteurs conducteurs de type P et un capteur d'oxygène comportant des matériaux capteurs conducteurs de type N disposés selon un montage en pont où ces capteurs se trouvent au niveau de la même entrée et destinés à la tension d'entrée dans différentes branches du montage en pont.

6. Utilisation selon la revendication 5, caractérisée par une disposition, en pont, d'un capteur d'oxygène comportant des matériaux capteurs conducteurs de type P et d'un capteur d'oxygène comportant des matériaux capteurs conducteurs de type N, où on prévoit dans une branche du pont le montage en série des deux capteurs d'oxygène, constitués d'un matériau capteur conducteur de type P et d'un matériau conducteur de type N, et, dans l'autre branche du pont, le montage en série des deux capteurs d'oxygène constitués d'un matériau capteur conducteur de type N et conducteur de type P, de telle sorte que, au capteur d'oxygène comportant le matériau capteur conducteur de type N se trouvant dans l'une des branches du pont, soit opposé un capteur d'oxygène comportant un matériau capteur conducteur de type P dans l'autre branche du pont.

7. Utilisation selon la revendication 4, caractérisée en ce que l'application s'effectue sur le substrat à base de l'oxyde métallique Al₂O₃.

8. Utilisation des matériaux capteurs selon les revendications 1 à 7 dans des installations de gaz d'échappement, en particulier de véhicules à moteur.

9. Procédé de fabrication d'un capteur d'oxygène par utilisation des matériaux capteurs selon l'une des revendications 1 à 7, caractérisé en ce que les oxydes, carbonates et/ou oxycarbonates des métaux sont mélangés selon un mélange fin et selon des proportions stoechiométriques, sont sédimentés dans un solvant organique, séchés et calcinés, et que la poudre de cuprate ainsi obtenue est, sous forme d'une pâte, et par une technique d'application en couche épaisse, appliquée sur un substrat d'un oxyde métallique de préférence non conducteur, et cuite au four, l'écart stoechiométrique de l'oxygène étant ajusté par frittage dans une atmosphère contenant du O₂, de préférence l'oxygène pur.

10. Procédé selon la revendication 9, caractérisé en ce que la calcination s'effectue en deux passes de calcination, à des températures de 800 à 1000°C, avec interposition d'un étage de broyage.

11. Procédé selon la revendication 9, caractérisé en ce que la cuisson est mise en oeuvre à des températures croissantes, allant jusqu'à environ 1200°C.
